# EUROPEAN PATENT SPECIFICATION

(11) **EP 3 409 446 B1**
(45) Date of publication and mention of the grant of the patent: **01.12.2021**
(21) Application number: 18155875.0
(22) Date of filing: 08.02.2018
(51) Int. Cl.: B29C 65/00, B29C 65/18, B29C 65/70, B29C 43/00, B29C 43/02, B29C 70/00, B29C 65/02

(54) **METHOD OF CREATING LARGE COMPLEX COMPOSITE PANELS USING CO-CONSOLIDATION OF THERMOPLASTIC MATERIAL SUBPANELS**
VERFAHREN ZUR HERSTELLUNG VON GROSSEN KOMPLEXEN VERBUNDPLATTEN UNTER VERWENDUNG DER KOVERFESTIGUNG VON THERMOPLASTISCHEN TEILPLATTEN
PROCÉDÉ DE CRÉATION DE GRANDS PANNEAUX COMPOSITES COMPLEXES AU MOYEN D'UNE CO-CONSOLIDATION DE PANNEAUX COMPOSITES ÉLÉMENTAIRES EN MATÉRIAU THERMOPLASTIQUE

(30) Priority: 30.05.2017 US 201715608245
(43) Date of publication of application: 05.12.2018
(73) Proprietor: The Boeing Company, Chicago, IL 60606-1596 (US)
(72) Inventor: Cominsky, Kenneth D., Chicago, 60606-1596 (US); McCrea, Trevor S., Chicago, IL Illinois 60606 (US); Gideon, David E., Chicago, IL Illinois 60606 (US); Dopker, Bernhard, Chicago, IL Illinois 60606 (US); Diep, Paul, Chicago, IL Illinois 60606 (US); Murphy, Julie F., Chicago, IL Illinois 60606-1596 (US); Erickson, Jordan S., Chicago, IL Illinois 60606-1596 (US)
(74) Representative: Witte, Weller & Partner Patentanwälte mbB

(56) References cited:
- EP-A1- 3 026 259
- EP-A1- 3 098 063
- WO-A1-2008/008824
- FR-A1- 2 985 943
- GB-A- 2 321 616
- US-A- 3 897 296
- US-A1- 2011 155 302
- US-A1- 2016 375 630
- US-B2- 7 678 215
- B. Tomas Astr?m: "Thermoplastic composite manufacturing" In: "Composites", 1 December 2001 (2001-12-01), ASM International, USA, XP55078683, ISBN: 978-0-87-170703-1 pages 570-578,
- CAMPBELL F C ED - CAMPBELL FLAKE C: "Manufacturing processes for advanced composites, Chapter 10 (Thermoplastic Composites: An Unfulfilled Promise)", 1 January 2004 (2004-01-01), MANUFACTURING PROCESSES FOR ADVANCED COMPOSITES, ELSEVIER ADVANCED TECHNOLOGY, OXFORD, GB, PAGE(S) 1 - 41, XP002615944, ISBN: 978-1-85617-415-2
- Douglas A. Mccarville ET AL: "Processing and joining of thermoplastic composites" In: "Composites", 1 December 2001 (2001-12-01), ASM International, USA, XP0055066726, ISBN: 978-0-87-170703-1 pages 633-645, DOI: 10.31399/asm.hb.v21.a0003425,

## Description

### FIELD

This disclosure is directed to a method of constructing a large, complex composite panel. The method involves connecting smaller compression molded thermoplastic subpanels, edge to edge using a thermoplastic co-consolidation method. The edges of adjacent subpanels are given complementary surface constructions. The surface constructions are overlapped and heat and pressure are applied to the overlapping surface constructions to co-consolidate the surface constructions in forming a large composite panel from two or more subpanels.

### BACKGROUND

Compression molding is a method of molding in which a pre-heated molding material is first placed into a open, heated mold cavity. The mold is closed and pressure is applied to force the material into contact with all of the mold areas. Throughout the molding process, heat and pressure are maintained until the molding material has cured.

Due to limitations on a size of a mold, compression molding thermoplastic panels can only be performed on smaller panels. Large, complex panel-like structures, such as the horizontal pressure deck of an aircraft, which could take advantage of the properties of thermoplastics, cannot be fabricated as a single piece cost efficiently due to tooling capability.

EP 3 026 259 A1 states, according to its abstract, that methods of manufacturing spar caps for a rotor blade of a wind turbine are disclosed. The method includes providing a plurality of pultrusions constructed of one or more fibers or fiber bundles cured via a resin material. Another step includes tapering the ends of the pultrusions at a predetermined angle. The method also includes arranging the tapered pultrusions in a mold of the spar cap. The method also includes joining the plurality of pultrusions together so as to form the spar cap.

GB 2 321 616 A states, according to its abstract, that the invention concerns a band, such as a transmission belt, joining system including a method of preparing and making a join in a band, a tool for supporting the band when making the join and an attachment for a hot air gun to facilitate making the join. The tool comprises first and second arms pivotally attached to one another in a scissor type configuration and having first and second guide members associated with the arms for supporting band end regions during the formation of a join. The band ends are prepared by cutting them in a stepped fashion and are positioned, for joining, with the guide members of the tool and supported in a configuration in which the hot air gun attachment may be interposed between the two band end regions supported in the tool, hot air applied to the band end regions and then compressive force used to bring the molten band end regions into contact with one another to form a welded join. The band end regions are cut such that each band end region retains elements of a central reinforcing member, those elements aiding the formation of a strong join.

US 2016/0375630 A1 states, according to its abstract, that a method for welding together a first and a second multiple layered thermoplastic layer composite material component, includes removing material of the first and second components along a first and a second longitudinal edge, respectively, by a laser beam to form a first and a second step structure, respectively, having a plurality of steps. Each step is formed by one other or several others of the layers of the first and the second component, respectively, and has a surface section parallel to the direction of extension of the layers and a front section transverse to the direction of extension of the layers. The first and the second components are disposed in the abutting position, and then the first and second components are welded together by welding together the abutting surface sections of the steps of the first and second step structures.

US 2011/0155302 A1 states, according to its abstract, that a method of making a composite panel assembly includes: (a) preparing two composite panels each of which has first and second face layers sandwiching a core, the first face layer having a main covering section and an extension; (b) mating the two composite panels; (c) placing a heat-sensitive adhesive sheet over the extension of the first face layer of each of the composite panels before the mating of the two composite panels; (d) heating parts of the composite panels that are mated; and (e) cooling the parts of the composite panels.

US 3,897,296 A states, according to its abstract, that a method of welding two plastic surfaces together comprises the steps of: juxtaposing the surfaces, heating the surfaces to a temperature approaching the flashpoint of the plastic surfaces to liquify the surfaces, removing a portion of the liquified surfaces to expose unoxidized surfaces therebeneath and immediately thereafter bringing the unoxidized surfaces into abutment with one another. The heating of the juxtaposed surfaces is accomplished by contacting the surfaces with a heated tool which has been preheated to a temperature approaching the flashpoint of the plastic surfaces. The tool also serves to remove a portion of the liquified surfaces. Various apparatus are disclosed for carrying out the method. In one embodiment, the apparatus includes a reciprocating heated tool. In another apparatus, the heated tool is a rotating disc. In yet another apparatus, the heated tool is a continuously circulating band. In yet another embodiment of the invention, the apparatus comprises a hand-held portable, heated tool. Various plastic articles are welded utilizing the method and the apparatus disclosed.

FR 2 985 943 A1 states, according to its abstract, that the method involves forming thermal and/or phonic insulating core by juxtaposing and side-by-side welding of blocks of rigid thermoplastic foam, where side surfaces of the blocks are preformed to weld all the adjacent blocks in pairs by thermo-fusion on entire common surface of the adjacent blocks and form stiffeners with I-shaped vertical welding zones of density higher than that of the foam. An upper surface of the core is glued against an upper rigid facing using an adhesive. The stiffeners form an angle of 45-90 degrees with an upper surface of one adjacent block. An independent claim is also included for an acoustic and/or thermal sandwich composite panel.

EP 3 098 063 A1 states, according to its abstract, that a method of forming a scarf joint between first and second elongate composite components each having a complimentary tapered end surface is disclosed. At least one of the components is formed of a stack of fibre layers impregnated in resin, with the tapered end surface being formed by each fibre layer extending longitudinally progressively further than the adjacent layer. The method comprises applying adhesive to at least one of the tapered end surfaces, attaching a moulding tool around the first and second elongate components with their tapered end surfaces being adjacent to one another, applying a positive pressure increase to urge the tapered surfaces towards one another without locally reducing the pressure below the vapour pressure of the resin or adhesive throughout the curing process, and curing the resin and adhesive in the moulding tool with the pressure applied..

US 7,678,215 B2 states, according to its abstract, that a method of installing flooring and resulting structure are disclosed. The method is particularly useful for sanitary nonslip applications such as kitchens. The method includes the steps of positioning a first sheet of polymer flooring material with an upwardly-facing step cut along one edge of the first sheet on a floor to be covered, and applying a second sheet of polymer flooring material with a complementary downwardly-facing step cut along one edge of the second sheet to the upwardly facing step cut of the first sheet and to the floor adjacent the first sheet while concurrently sealing the respective faces to one another in a step lap joint.

WO 2008/008824 A1 states, according to its abstract, that a method of installing flooring and resulting structure are disclosed. The method is particularly useful for sanitary nonslip (or slip resistant) applications such as kitchens. The method includes the steps of positioning a first sheet of polymer flooring material with an upwardly-facing step cut along one edge of the first sheet on a floor to be covered, and applying a second sheet of polymer flooring material with a complementary downwardly-facing step cut along one edge of the second sheet to the upwardly facing step cut of the first sheet and to the floor adjacent the first sheet while concurrently sealing or bonding the respective faces to one another in a step lap joint.

### SUMMARY

This disclosure pertains to a method of constructing a large, complex composite panel and the composite panel constructed. The method involves constructing the large, complex composite panel from several smaller thermoplastic subpanels.

A method of constructing a large flat panel according to the independent claim 1 is disclosed.

Several subpanels, for example four subpanels are compression molded of carbon fiber reinforced thermoplastic. Each subpanel is molded with a first surface on one side of the subpanel and a second surface on an opposite side of the subpanel. Each subpanel has a peripheral edge surface extending completely around the subpanel. The peripheral edge surface extends between the first surface and the second surface of each subpanel and separates the first surface and the second surface.

At least a portion of the peripheral edge of each subpanel is then given a machined surface or a scarf surface. For example, the machined surface of each subpanel could be a ramped surface or a tapered surface. The machined surface of each subpanel is complementary to the machined surfaces of the other subpanels. For example, where the machined surface is a ramped or tapered surface, the ramped or tapered surfaces have the same angular orientation relative to the first surface of each subpanel and the second surface of each subpanel.

The plurality of subpanels are then brought together with the machined surfaces of adjacent subpanels engaging against each other. For example, in creating a large, complex composite panel from four subpanels, the four subpanels are brought together in a two-dimensional array with two machined surfaces of each subpanel engaging against machined surfaces of two adjacent subpanels.

With the machined surfaces of the subpanels engaging and overlapping, the areas of the engaging machined surfaces between adjacent subpanels are heated and pressure is applied to the engaging surfaces. The heating of the engaging machined surfaces and the pressure applied to the engaging machined surfaces produces a full melt bond and a co-consolidation between the engaging machined surfaces. The engaging machined surfaces of the subpanels are then allowed to cool, forming the large, complex composite panel from the four smaller subpanels.

Additional joining features could then be applied over the areas of the joined machined surfaces. For example, strips of carbon fiber reinforced thermoplastic could be positioned over the joined machined surfaces and then heated with pressure applied to co-consolidate the strips to the first surfaces of the joined subpanels and the second surfaces of the joined subpanels.

The features, functions and advantages that have been discussed can be achieved independently in various embodiments or may be combined in yet other embodiments, further details of which can be seen with reference to the following description and drawings.

### BRIEF DESCRIPTION OF THE DRAWINGS

Figure 1 is a representation of a perspective view of an initial step in the method of creating large, complex composite panels from smaller subpanels of this disclosure.
Figure 2 is a representation of a further step of the method of this disclosure.
Figure 3 is a representation of a still further step of the method of this disclosure.
Figure 4 is a representation of a still further step of the method of this disclosure.
Figure 5 is a representation of an additional step of the method of this disclosure.
Figure 6 is a representation of the additional step of this disclosure.
Figure 7 is a representation of the large, complex composite panel created by the method of this disclosure.
Figures 8-11 are representations of cross-sections of different configurations of the machined surfaces of two adjacent subpanels.

### DETAILED DESCRIPTION

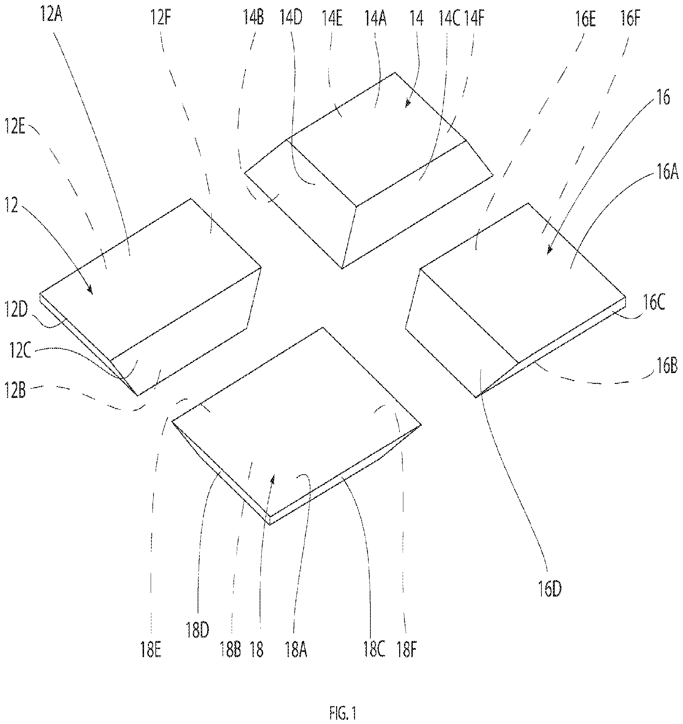

Figure 1 is a representation of a perspective view of an initial step of the method of constructing a large, complex composite panel using co-consolidation of thermoplastic materials of this disclosure. According to the method, the large flat panel is constructed from several smaller subpanels. Four subpanels 12, 14, 16, 18 are represented in Figure 1. However, it should be understood that the large flat panel 22 could be constructed of fewer than the four subpanels 12, 14, 16, 18 represented in Figure 1, or more than the four subpanels.

Each of the four subpanels 12, 14, 16, 18 are first formed by compression molding of carbon fiber reinforced thermoplastic to create the subpanels. Each of the subpanels 12, 14, 16, 18 is molded with a first surface 12A, 14A, 16A, 18A on one side of the subpanel and a second surface 12B, 14B, 16B, 18B on an opposite side of the subpanel. As represented in Figure 1, the first surfaces 12A, 14A, 16A, 18A and the opposite second surfaces 12B, 14B, 16B, 18B are configured as flat, parallel surfaces. However, the first and second surfaces can have different configurations depending on the configuration of the large flat panel to be constructed from the subpanels. The first surfaces 12A, 14A, 16A, 18A and the second surfaces 12B, 14B, 16B, 18B are also molded with rectangular configurations. However, the configurations of the surfaces could be different depending on the desired configuration of the large flat panel to be formed from the subpanels.

Each of the subpanels 12, 14, 16, 18 has a peripheral edge surface extending completely around the subpanel. The peripheral edge surface of each subpanel 12, 14, 16, 18 extends between the first surface 12A, 14A, 16A, 18A of each respective subpanel and the second surface 12B, 14B, 16B, 18B of each respective subpanel. The peripheral edge surfaces separate the first surfaces 12A, 14A, 16A, 18A from the respective second surfaces 12B, 14B, 16B, 18B. In the representation of Figure 1, each of the subpanels 12, 14, 16, 18 has a peripheral edge surface comprised of four constructed or machined surfaces. For example, the first subpanel 12 has four constructed or machined surfaces 12C, 12D, 12E, 12F. The second subpanel 14 has four constructed or machined surfaces 14C, 14D, 14E, 14F. The third subpanel 16 has four constructed or machined surfaces 16C, 16D, 16E, 16F. The fourth subpanel 18 has four constructed or machined surfaces 18C, 18D, 18E, 18F. In the representation of Figure 1, the constructed or machined surfaces are all flat, tapered or ramped surfaces. The constructed or machined surfaces could have other equivalent configurations, as will be explained.

In the two dimension arrangement of the subpanels 12, 14, 16, 18, opposing machined surfaces have complementary scarf surface configurations. In the example represented in Figure 1, opposing, complementary tapered surfaces or complementary flat construction surfaces are parallel to each other and have substantially equal areas. For example, the opposing machined surfaces 12F and 14D of the respective first subpanel 12 and second subpanel 14 are complementary and will engage in surface contact against each other. The opposing machined surfaces 12F, 14D represented in Figure 1 are flat, tapered surfaces. However, the opposing machined surfaces 12F, 14D could have other, equivalent configurations that will engage in surface contact with each other.

The opposing machined surfaces 12C, 18E of the respective first subpanel 12 and fourth subpanel 18 are also complementary surfaces that will engage in surface contact with each other. Again, the opposing machined surfaces 12C, 18E represented in Figure 1 are flat, tapered surfaces. However, the opposing machined surfaces 12C, 18E could have other, equivalent configurations that will engage in surface contact with each other.

The opposing machined surfaces 14C and 16E of the respective second subpanel 14 and third subpanel 16 are also complementary surface that will engage in surface contact with each other.

Furthermore, the opposing machined surfaces 16D and 18F are complementary surfaces that will engage in surface contact with each other. Although the opposing machined surfaces 16D, 18F are represented as flat, tapered surfaces, the surfaces could have other equivalent configurations that will engage in surface contact with each other.

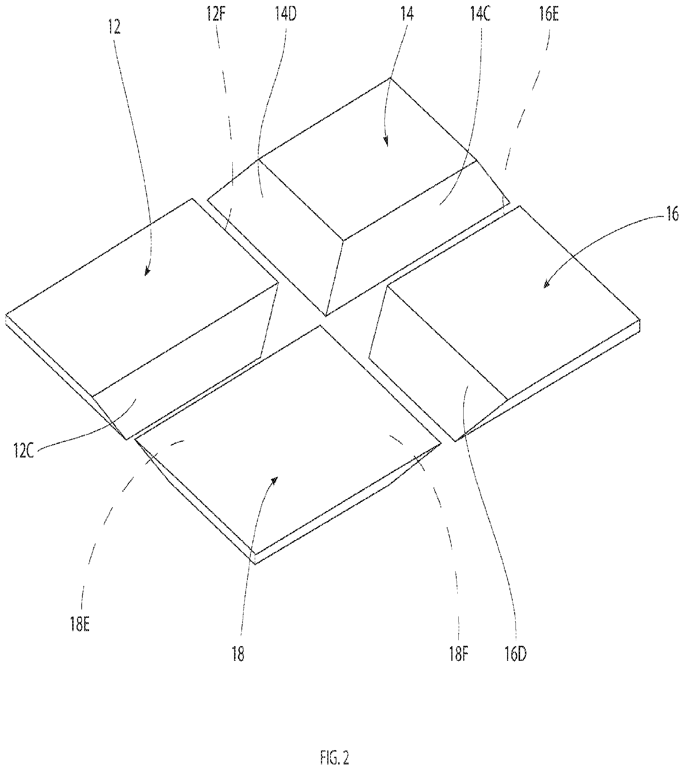

Referring to Figure 2, a further step in the method of this disclosure is represented. In Figure 2, each of the subpanels 12, 14, 16, 18 arranged in a single plane and a two-dimensional array are moved or converged toward each other. The first subpanel 12 is moved toward the second subpanel 14 and toward the fourth subpanel 18. The second subpanel 14 is moved toward the first subpanel 12 and toward the third subpanel 16. The third subpanel 16 is moved toward the second subpanel 14 and the fourth subpanel 18.

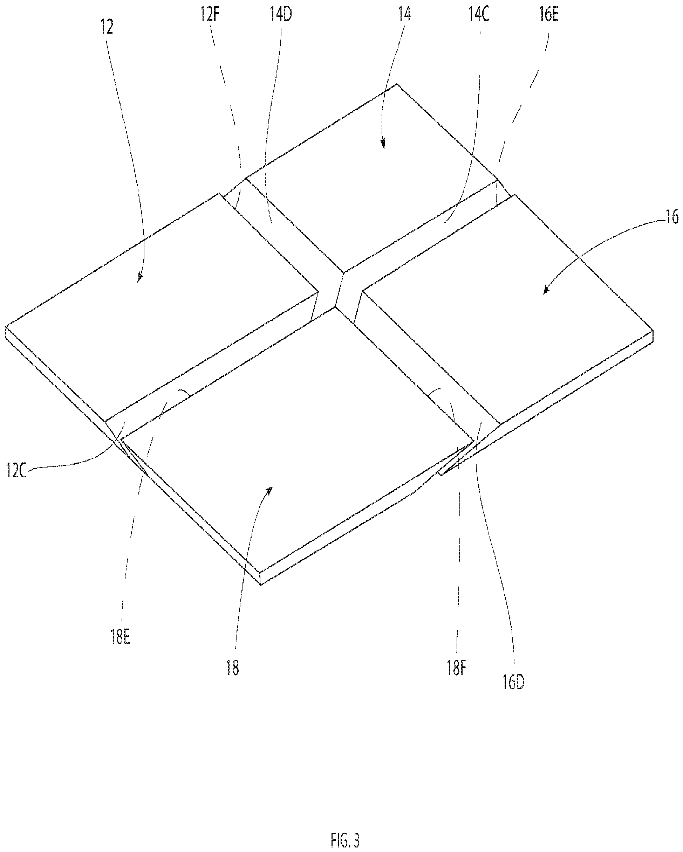

Figure 3 is a representation of the further, converging movement of the four subpanels 12, 14, 16, 18. As the subpanels 12, 14, 16, 18 are continued to be moved toward each other, the machined surfaces of the subpanels begin to overlap. For example, the machined surface 12F of the first subpanel 12 begins to overlap the machined surface 14D of the second subpanel 14. The machined surface 14C of the second subpanel 14 begins to overlap with the machined surface 16E of the third subpanel 16. The machined surface 16D of the third subpanel 16 begins to overlap with the machined surface 18F of the fourth subpanel 18. The machined surface 18E of the fourth subpanel 18 begins to overlap with the machined surface 12C of the first subpanel 12.

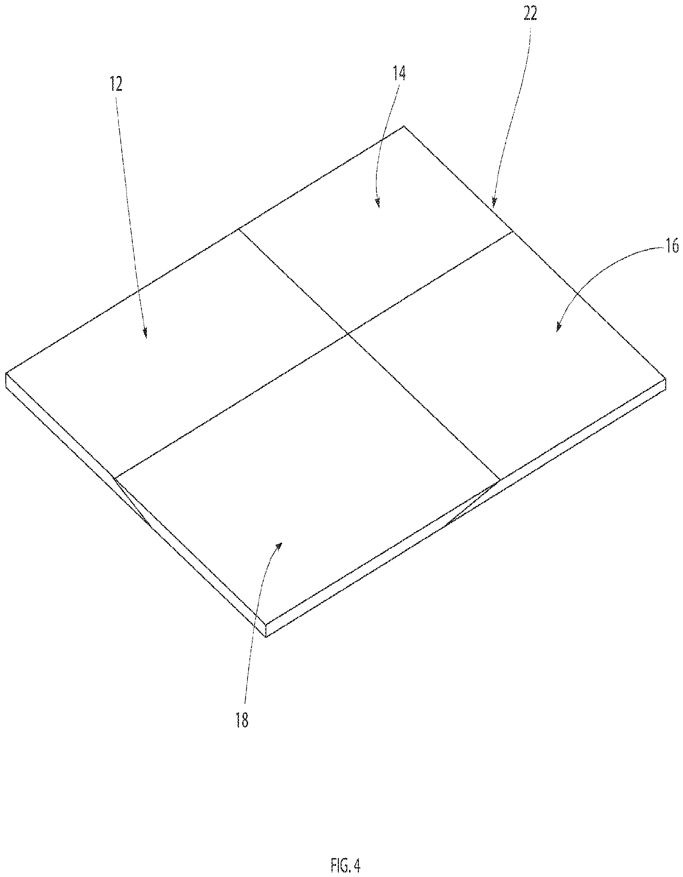

Figure 4 is a representation of the further converging movement of the four subpanels 12, 14, 16, and 18. In Figure 4 the machined surface 12F of the first subpanel 12 and the machined surface 14D of the second subpanel 14 are engaged in surface engagement. The machined surface 14C of the second subpanel 14 and the machined surface 16E of the third subpanel 16 are engaged in surface engagement. The machined surface 16D of the third subpanel 16 and the machined surface 18F of the fourth subpanel 18 are in surface engagement. The machined surface 18E of the fourth subpanel 18 and the machined surface 12C of the first subpanel 12 are engaged in surface engagement.

The overlapping, engaging machined surfaces are then heated and pressure is applied to the opposite sides of the overlapping machined surfaces to press the overlapping machined surfaces together. Heating of the overlapping machined surfaces and the pressure to the opposite sides of the overlapping machined surfaces begins to melt the engaging machined surfaces and forms a full melt bond and a co-consolidation between the engaging, overlapping machined surfaces. The engaging, overlapping machined surfaces of the subpanels 12, 14, 16, 18 are then allowed to cool, forming the large, complex composite panel 22 represented in Figure 4 from the four subpanels 12, 14, 16, 18.

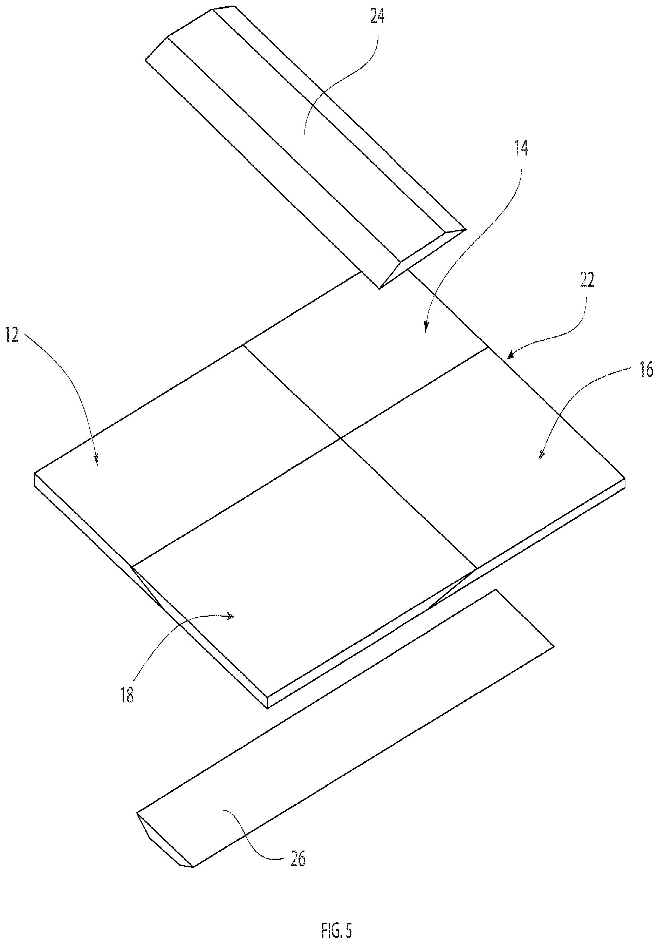

Figures 5-7 are representations of additional steps that can be taken to reinforce the large, complex composite panel 22 formed from the four subpanels 12, 14, 16, 18. In Figure 5, a first splice strap of carbon fiber reinforced thermoplastic 24 is positioned over one side of the large, complex composite panel 22 and a second splice strap 26 of carbon fiber reinforced plastic is positioned on the opposite side of the large, complex composite panel. As represented in Figure 5, the two splice straps 24, 26 are oriented perpendicular or in a cross-configuration relative to each other.

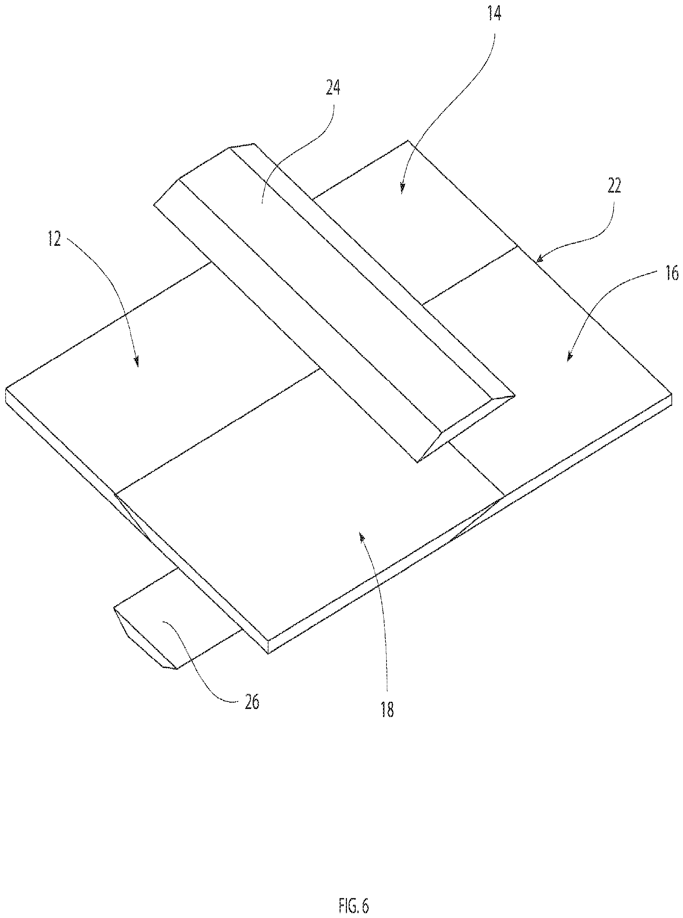

As represented in Figure 6, the first splice strap 24 is moved toward the one side of the large, complex composite panel 22 and the second splice strap 26 is moved toward the opposite side of the large, composite panel 22.

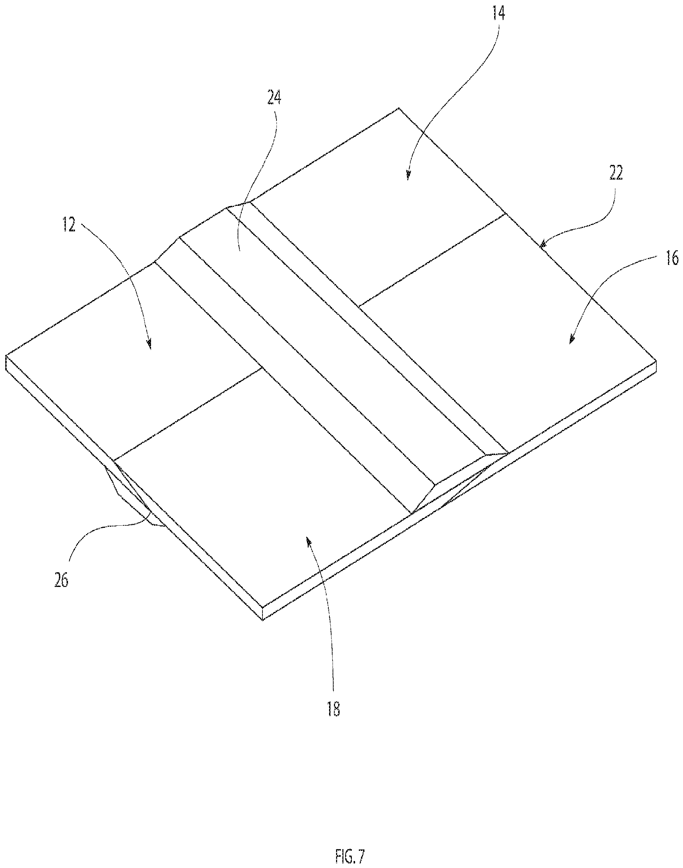

As represented in Figure 7, the first splice strap 24 is positioned on the large, complex composite panel 22 extending over the co-consolidated joint between the fourth machined surface 12F of the first subpanel 12 and the second machined surface 14D of the second subpanel 14 and between the fourth machined surface 18F of the fourth subpanel 18 and the second machined surface 16D of the third subpanel 16. The second splice strap 26 is positioned on the opposite side of the large, complex composite panel 22 over the co-consolidated joint between the first machined surface 12C of the first subpanel 12 and the third machined surface 18E of the fourth subpanel 18 and the co-consolidated joint between the first machined surface 14C of the second subpanel 14 and the third machined surface 16E of the third subpanel 16. With the first splice strap 24 and the second splice strap 26 positioned against opposite sides of the large, complex composite panel 22 as described above, heat is applied to the first splice strap 24 and the second splice strap 26 and pressure is applied to the first splice strap 24 and the second splice strap 26, pressing the strips against opposite sides of the large, complex composite panel. The heat and the pressure applied to the first splice strap 24 and the second splice strap 26 forms a full melt bond and a co-consolidation between the first splice strap 24 and the second splice strap 26 and the opposite sides of the large, complex composite panel 22.

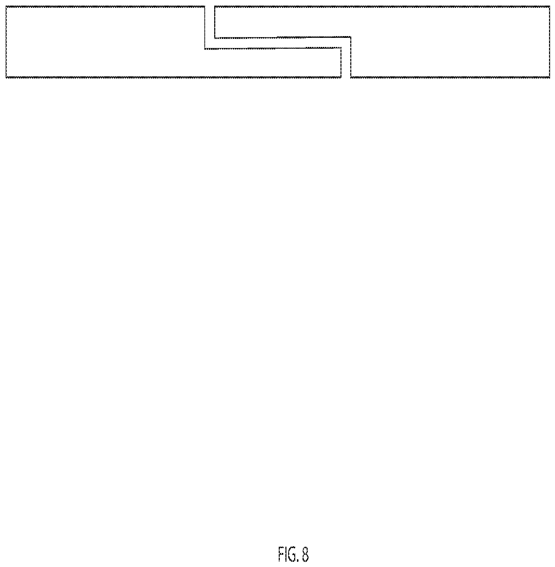

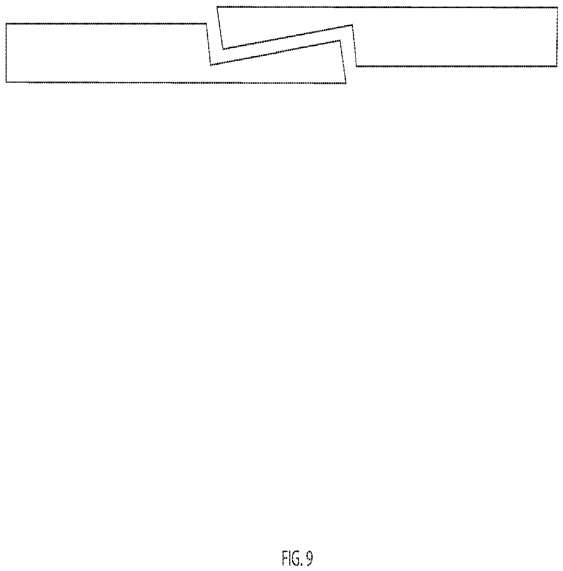

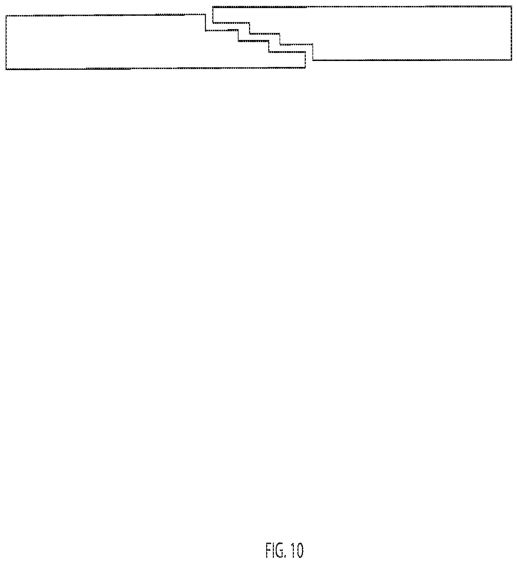

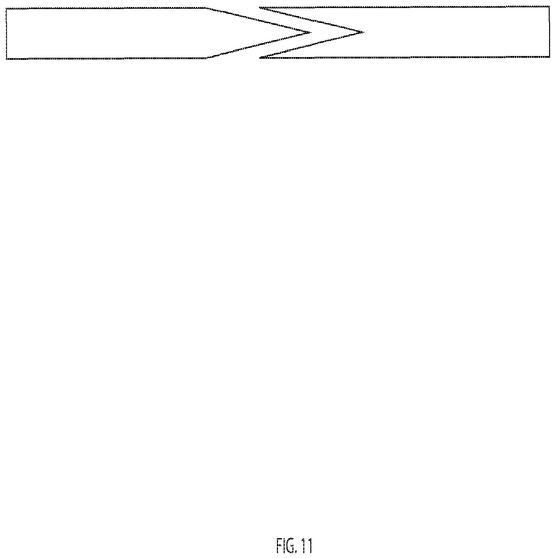

As stated earlier, it is not necessary that the complementary, engaging machined surfaces of adjacent subpanels have tapered or ramped surfaces as described earlier. Figures 8-11 are representations of other, equivalent machined surfaces configurations that could be employed by adjacent subpanels in producing the full melt bond and the co-consolidation between the engaging machined surfaces of the adjacent subpanels.

It is important to point out that in each of the above described methods of creating a large, complex composite panel by connecting smaller compression molded thermoplastic subpanels, that using scarf-type edge connections results in the large panel having smooth, continuous upper and lower surfaces. This is not possible in creating a large panel by overlapping or lap-splicing adjacent edges of subpanels to produce the large panel. Such a panel will have stepped upper and lower surfaces at the connection of the adjacent subpanels, which results in eccentricities that are design, stress and integration issues. The method of co-consolidating or welding two overlapped thermoplastic subpanels to form a large panel does not result in a large panel that has smooth, continuous upper and lower surfaces as do the methods of co-consolidating scarf-type edges of subpanels to create a large panel described above.

As various modifications could be made in the construction of the apparatus and its method of operation herein described and illustrated without departing from the scope of the invention, it is intended that all matter contained in the foregoing description or shown in the accompanying drawings shall be interpreted as illustrative rather than limiting. Thus, the breadth and scope of the present disclosure should not be limited by any of the above described exemplary embodiments, but should be defined only in accordance with the following claims appended hereto.

## Claims

1. A method of constructing a large flat panel (22), the method comprising:
producing a first subpanel (12) of a thermoplastic with carbon fiber reinforcement;
constructing a first machined surface (12F) along an edge of the first subpanel (12);
producing a second subpanel (14) of a thermoplastic with carbon fiber reinforcement;
constructing a second machined surface (14D) along an edge of the second subpanel (14);
positioning the first machined surface (12F) on the first subpanel (12) oppositely against the second machined surface (14D) on the second subpanel (14), wherein the first machined surface (12F) and the second machined surface (14D) are complementary scarf surfaces that engage in surface contact with each other;
heating, after positioning, the first machined surface (12F) and the second machined surface (14D) and applying pressure thereto; and,
cooling the first machined surface (12F) and the second machined surface (14D);
wherein a full melt bond and a co-consolidation between the engaging first machined surface (12F) and the second machined surface (14D) is produced by the heating of the engaging first machined surface (12F) and the second machined surface (14D) and the pressure applied thereto.

2. The method of claim 1, further comprising:
overlapping the first machined surface (12F) and the second machined surface (14D) prior to heating the first machined surface (12F) and the second machined surface (14D).

3. The method of one of claims 1-2, further comprising:
constructing the first machined surface (12F) and constructing the second machined surface (14D) as complementary tapered surfaces.

4. The method of one of claims 1-3, further comprising:
constructing the first machined surface (12F) and the second machined surface (14D) as complementary flat surfaces.

5. The method of one of claims 1-4, further comprising:
positioning a splice strap (24) over the engaging first machined surface (12F) and second machined surface (14D); and,
heating the splice strap (24) positioned over the overlapping first machined surface (12F) and second machined surface (14D).

6. The method of claim 5, further comprising:
applying pressure to the splice strap (24) while heating the splice strap (24).

7. The method of one of claims 1-6, further comprising:
constructing a further machined surface along the edge of the first subpanel (12);
producing a third subpanel (18);
constructing a third machined surface (18E) along an edge of the third subpanel;
positioning the third machined surface (18E) of the third subpanel (18) against the further machined surface of the first subpanel (12);
heating the further machined surface of the first subpanel (12) and the third machined surface (18E) of the third subpanel (18); and,
allowing the further machined surface of the first subpanel (12) and the engaging third machined surface (18E) of the third subpanel (18) to cool and co-consolidate.

8. The method of one of claims 1-7, wherein,
producing a first subpanel (12) comprises compression molding the thermoplastic with carbon fiber reinforcement; and producing a second subpanel (14) comprises compression molding the thermoplastic with carbon fiber reinforcement.

9. The method of one of claims 5-6, wherein the splice strap (24) is made of carbon fiber reinforced thermoplastic.

10. The method of claim 7, further comprising a fourth subpanel (16) having four machined surfaces (16C, 16D, 16E, 16F).

11. The method of one of claims 1 to 11, wherein first surfaces (12A, 14A, 16A, 18A) and second surfaces (12B, 14B, 16B, 18B) of the subpanels (12, 14, 16, 18) are molded with rectangular configurations.

12. The method of claim 10, further comprising converging moving of the four subpanels (12, 14, 16, 18).

13. The method of claim 12, wherein converging moving is performed such that the first machined surface (12F) of the first subpanel (12) begins to overlap the second machined surface (14D) of the second subpanel (14), a machined surface (14C) of the second subpanel (14) begins to overlap with the machined surface (16E) of the fourth subpanel (16), the machined surface (18F) of the third subpanel (18) begins to overlap with the machined surface (16D) of the fourth subpanel (16), and the machined surface (18E) of the third subpanel (18) begins to overlap with a machined surface (12C) of the first subpanel (12).

14. The method of claim 13, wherein overlapping, engaging machined surfaces (12C, 12F, 14C, 14D, 16E, 16D, 18F, 18E) are heated and pressure is applied to the opposite sides of the overlapping machined surfaces to press the overlapping, engaging machined surfaces (12C, 12F, 14C, 14D, 16E, 16D, 18F, 18E) together.

## Patentansprüche

1. Verfahren zum Konstruieren einer großen flachen Platte (22), wobei das Verfahren aufweist:
Erzeugen einer ersten Teilplatte (12) aus einem Thermoplast mit einer Carbonfaserverstärkung;
Konstruieren einer ersten bearbeiteten Fläche (12F) entlang eines Rands der ersten Teilplatte (12);
Erzeugen einer zweiten Teilplatte (14) aus einem Thermoplast mit einer Carbonfaserverstärkung;
Konstruieren einer zweiten bearbeiteten Fläche (14D) entlang eines Rands der zweiten Teilplatte (14);
Positionieren der ersten bearbeiteten Fläche (12F) an der ersten Teilplatte (12) gegenüberliegend gegen die zweite bearbeitete Fläche (14D) an der zweiten Teilplatte (14), wobei die erste bearbeitete Fläche (12F) und die zweite bearbeitete Fläche (14D) komplementär angeschärfte Flächen sind, die mittels eines Flächenkontakts miteinander in Eingriff gebracht sind;
Erwärmen, nach einem Positionieren, der ersten bearbeiteten Fläche (12F) und der zweiten bearbeiteten Fläche (14D) und Ausüben eines Drucks darauf; und,
Abkühlen der ersten bearbeiteten Fläche (12F) und der zweiten bearbeiteten Fläche (14D);
wobei eine vollständige Schmelzverbindung und eine gemeinsame Verfestigung zwischen der in Eingriff gebrachten ersten bearbeiteten Fläche (12F) und der zweiten bearbeiteten Fläche (14D) durch das Erwärmen der in Eingriff gebrachten ersten bearbeiteten Fläche (12F) und der zweiten bearbeiteten Fläche (14D) und durch den darauf ausgeübten Druck hergestellt wird.

2. Verfahren nach Anspruch 1, das ferner aufweist:
Überlappen der ersten bearbeiteten Fläche (12F) und der zweiten bearbeiteten Fläche (14D) vor einem Erwärmen der ersten bearbeiteten Fläche (12F) und der zweiten bearbeiteten Fläche (14D).

3. Verfahren nach einem der Ansprüche 1-2, das ferner aufweist:
Konstruieren der ersten bearbeiteten Fläche (12F) und Konstruieren der zweiten bearbeiteten Fläche (14D) als komplementär verjüngte Flächen.

4. Verfahren nach einem der Ansprüche 1-3, das ferner aufweist:
Konstruieren der ersten bearbeiteten Fläche (12F) und der zweiten bearbeiteten Fläche (14D) als komplementäre flache Flächen.

5. Verfahren nach einem der Ansprüche 1-4, das ferner aufweist:
Positionieren eines Spleißbands (24) über der ersten bearbeiteten Fläche (12F) und der zweiten bearbeiteten Fläche (14D), die in Eingriff gebracht sind; und
Erwärmen des Spleißbands (24), das über der sich überlappenden ersten bearbeiteten Fläche (12F) und der zweiten bearbeiteten Fläche (14D) positioniert ist.

6. Verfahren nach Anspruch 5, das ferner aufweist:
Ausüben eines Drucks auf das Spleißband (24), während das Spleißband (24) erwärmt wird.

7. Verfahren nach einem der Ansprüche 1-6, das ferner aufweist:
Konstruieren einer weiteren bearbeiteten Fläche entlang des Rands der ersten Teilplatte (12);
Erzeugen einer dritten Teilplatte (18);
Konstruieren einer dritten bearbeiteten Fläche (18E) entlang eines Rands der dritten Teilplatte;
Positionieren der dritten bearbeiteten Fläche (18E) der dritten Teilplatte (18) gegen die weitere, bearbeitete Fläche der ersten Teilplatte (12);
Erwärmen der weiteren, bearbeiteten Fläche der ersten Teilplatte (12) und der dritten bearbeiteten Fläche (18E) der dritten Teilplatte (18); und
Zulassen, dass sich die weitere, bearbeitete Fläche der ersten Teilplatte (12) und die in Eingriff gebrachte dritte bearbeitete Fläche (18E) der dritten Teilplatte (18) abkühlen und gemeinsam verfestigen.

8. Verfahren nach einem der Ansprüche 1-7, wobei,
ein Erzeugen einer ersten Teilplatte (12) ein Druckgießen des Thermoplasts mit einer Carbonfaserverstärkung aufweist; und
ein Erzeugen einer zweiten Teilplatte (14) ein Druckgießen des Thermoplasts mit einer Carbonfaserverstärkung.

9. Verfahren nach einem der Ansprüche 5-6, wobei das Spleißband (24) aus einem carbonfaserverstärkten Thermoplast hergestellt ist.

10. Verfahren nach Anspruch 7, das ferner eine vierte Teilplatte (16) mit vier bearbeiteten Flächen (16C, 16D, 16E, 16F) aufweist.

11. Verfahren nach einem der Ansprüche 1 bis 11, wobei erste Flächen (12A, 14A, 16A, 18A) und zweite Flächen (12B, 14B, 16B, 18B) der Teilplatten (12, 14, 16, 18) mit rechteckigen Konfigurationen gegossen werden.

12. Verfahren nach Anspruch 10, das ferner ein Konvergieren des Bewegens der vier Teilplatten (12, 14, 16, 18) aufweist.

13. Verfahren nach Anspruch 12, wobei ein Konvergieren des Bewegens derart durchgeführt wird, dass sich die erste bearbeitete Fläche (12F) der ersten Teilplatte (12) mit der zweiten bearbeiteten Fläche (14D) der zweiten Teilplatte (14) zu überlappen beginnt, eine bearbeitete Fläche (14C) der zweiten Teilplatte (14) sich mit der bearbeiteten Fläche (16E) der vierten Teilplatte (16) zu überlappen beginnt, die bearbeitete Fläche (18F) der dritten Teilplatte (18) sich mit der bearbeiteten Fläche (16D) der vierten Teilplatte (16) zu überlappen beginnt und die bearbeitete Fläche (18E) der dritten Teilplatte (18) sich mit einer bearbeiteten Fläche (12C) der ersten Teilplatte (12) zu überlappen beginnt.

14. Verfahren nach Anspruch 13, wobei sich überlappende, in Eingriff gebrachte bearbeitete Flächen (12C, 12F, 14C, 14D, 16E, 16D, 18F, 18E) erwärmt werden und Druck auf die gegenüberliegenden Seiten der sich überlappenden bearbeiteten Flächen ausgeübt wird, um die sich überlappenden, in Eingriff gebrachten bearbeiteten Flächen (12C, 12F, 14C, 14D, 16E, 16D, 18F, 18E) zusammenzupressen.

## Revendications

1. Procédé de construction d'un grand panneau plat (22), le procédé comprenant :
la production d'un premier sous-panneau (12) d'un thermoplastique avec renforcement par fibres de carbone ;
la construction d'une première surface usinée (12F) le long d'un bord du premier sous-panneau (12) ;
la production d'un deuxième sous-panneau (14) d'un thermoplastique avec renforcement par fibres de carbone ;
la construction d'une deuxième surface usinée (14D) le long d'un bord du deuxième sous-panneau (14) ;
le positionnement de la première surface usinée (12F) sur le premier sous-panneau (12) de façon opposée contre la deuxième surface usinée (14D) sur le deuxième sous-panneau (14), dans lequel la première surface usinée (12F) et la deuxième surface usinée (14D) sont des surfaces en biais complémentaires qui entrent en prise en contact de surface l'une avec l'autre ;
le chauffage, après le positionnement, de la première surface usinée (12F) et de la deuxième surface usinée (14D) et l'application de pression sur celles-ci ; et,
le refroidissement de la première surface usinée (12F) et de la deuxième surface usinée (14D) ;
dans lequel une liaison par fusion complète et une co-consolidation entre la première surface usinée entrant en prise (12F) et la deuxième surface usinée (14D) est produite par le chauffage de la première surface usinée entrant en prise (12F) et la deuxième surface usinée (14D) et la pression appliquée sur celles-ci.

2. Procédé selon la revendication 1, comprenant en outre :
le chevauchement de la première surface usinée (12F) et de la deuxième surface usinée (14D) avant le chauffage de la première surface usinée (12F) et de la deuxième surface usinée (14D).

3. Procédé selon l'une des revendications 1 à 2, comprenant en outre :
la construction de la première surface usinée (12F) et de la construction de la deuxième surface usinée (14D) sous forme de surfaces inclinées complémentaires.

4. Procédé selon l'une des revendications 1 à 3, comprenant en outre :
la construction de la première surface usinée (12F) et de la deuxième surface usinée (14D) sous forme de surfaces plates complémentaires.

5. Procédé selon l'une des revendications 1 à 4, comprenant en outre :
le positionnement d'une bande de jonction (24) sur la première surface usinée (12F) et deuxième surface usinée (14D) entrant en prise ; et,
le chauffage de la bande de jonction (24) positionnée sur les première surface usinée (12F) et deuxième surface usinée (14D) en chevauchement.

6. Procédé selon la revendication 5, comprenant en outre :
l'application de pression sur la bande de jonction (24) durant le chauffage de la bande de jonction (24).

7. Procédé selon l'une des revendications 1 à 6, comprenant en outre :
la construction d'une surface usinée supplémentaire le long du bord du premier sous-panneau (12) ;
la production d'un troisième sous-panneau (18) ;
la construction d'une troisième surface usinée (18E) le long d'un bord du troisième sous-panneau ;
le positionnement de la troisième surface usinée (18E) du troisième sous-panneau (18) contre la surface usinée supplémentaire du premier sous-panneau (12) ;
le chauffage de la surface usinée supplémentaire du premier sous-panneau (12) et de la troisième surface usinée (18E) du troisième sous-panneau (18) ; et,
le refroidissement et la co-consolidation libres de la surface usinée supplémentaire du premier sous-panneau (12) et de la troisième surface usinée entrant en prise (18E) du troisième sous-panneau (18).

8. Procédé selon l'une des revendications 1 à 7, dans lequel,
la production d'un premier sous-panneau (12) comprend le moulage par compression du thermoplastique avec renforcement par fibres de carbone ; et la production d'un deuxième sous-panneau (14) comprend le moulage par compression du thermoplastique avec renforcement par fibres de carbone.

9. Procédé selon l'une des revendications 5 et 6, dans lequel la bande de jonction (24) est faite de thermoplastique renforcé par fibres de carbone.

10. Procédé selon la revendication 7, comprenant en outre un quatrième sous-panneau (16) ayant quatre surfaces usinées (16C, 16D, 16E, 16F).

11. Procédé selon l'une des revendications 1 à 11, dans lequel des premières surfaces (12A, 14A, 16A, 18A) et des secondes surfaces (12B, 14B, 16B, 18B) des sous-panneaux (12, 14, 16, 18) sont moulées avec des configurations rectangulaires.

12. Procédé selon la revendication 10, comprenant en outre le mouvement convergent des quatre sous-panneaux (12, 14, 16, 18).

13. Procédé selon la revendication 12, dans lequel le mouvement convergent est réalisé de telle sorte que la première surface usinée (12F) du premier sous-panneau (12) commence à chevaucher la deuxième surface usinée (14D) du deuxième sous-panneau (14), une surface usinée (14C) du deuxième sous-panneau (14) commence à chevaucher la surface usinée (16E) du quatrième sous-panneau (16), la surface usinée (18F) du troisième sous-panneau (18) commence à chevaucher la surface usinée (16D) du quatrième sous-panneau (16), et la surface usinée (18E) du troisième sous-panneau (18) commence à chevaucher une surface usinée (12C) du premier sous-panneau (12).

14. Procédé selon la revendication 13, dans lequel des surface usinées entrant en prise, en chevauchement (12C, 12F, 14C, 14D, 16E, 16D, 18F, 18E) sont chauffées et une pression est appliquée sur les côtés opposés des surfaces usinées en chevauchement pour presser les surfaces usinées entrant en prise, en chevauchement (12C, 12F, 14C, 14D, 16E, 16D, 18F, 18E) ensemble.
